# EUROPEAN PATENT APPLICATION

(11) **EP 4 596 598 A1**
(43) Date of publication of application: **06.08.2025**
(21) Application number: 24155031.8
(22) Date of filing: 31.01.2024
(51) Int. Cl.: C08G 18/22, C08G 18/28, C08G 18/30, C08G 18/38, C08G 18/48, C08G 18/50, C08G 18/76, C08G 18/80, C09J 175/08

(54) **HOT-MELT ADHESIVE COMPOSITION HAVING ADJUSTABLE CURING BEHAVIOR**

(71) Applicant: Sika Technology AG, 6340 Baar (CH)
(72) Inventor: BORDEANU, Nicolae, 8400 Winterthur (CH); HENTSCHEL, Anne, 22527 Hamburg (DE)
(74) Representative: Sika Patent Attorneys

(57) **Abstract**

The invention relates to a hot-melt adhesive composition:
a) A blocked polyurethane prepolymer **PU**,
b) At least one with isocyanate reactive compound **P**,
c) At least one thiol compound **T**, and
d) At least one metal catalyst C that can catalyze reactions between isocyanate groups and isocyanate reactive groups and that can build thiol complexes,

wherein the blocked polyurethane prepolymer **PU** is a polyurethane prepolymer of the formula (I) 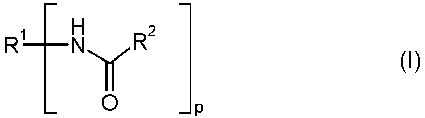 where R¹ is a p-valent radical of a linear or branched isocyanate terminated polyurethane prepolymer after the removal of the isocyanate groups;
p has a value of 2 to 8; and
R² is a blocking group which is eliminated at a temperature of at or above 100 °C, preferably at or above 130 °C.

## Description

### Technical field

The invention relates to reactive hot-melt adhesives and to the use of these as an assembly adhesive, a laminating adhesive, or as an adhesive for the building of sandwich elements, particularly in the automotive industry.

### Background of the invention

Hot-melt adhesives are solvent free adhesives, which are solid at room temperature and which are applied to the substrate to be bonded in the form of a melt. After cooling the adhesive solidifies and forms an adhesive bond with the substrate through physically occurring bonding. Conventional hot-melt adhesives are non-reactive adhesives, which soften again upon heating and are, therefore, not suitable to be used at elevated temperatures. Reactive hot-melt adhesives contain polymers with reactive groups that enable chemical curing of the adhesive, for example, by crosslinking of the polymer chains. Due to the cured polymer matrix the reactive hot-melt adhesives do not soften upon heating and these adhesives are, therefore, suitable for use also at elevated temperatures. The chemical curing of the polymers can be initiated, for example, by exposing the adhesive composition to water. Moisture curing hot-melt adhesives typically contain polymers functionalized with isocyanate or silane groups, which enable the crosslinking of the polymer chains upon contact with water, particularly with atmospheric moisture.

Typical reactive hot-melt adhesives used in the automotive industry as assembly adhesives include moisture curing polyurethane- and polyolefin- based hot melt adhesives. Moisture curing polyurethane hot-melt (PU-RHM) adhesives consist mainly of isocyanate-terminated polyurethane prepolymers, which have been obtained by reacting suitable polyols, typically diols, with a stoichiometric excess of polyisocyanates, typically diisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. Moisture curing polyolefin hot-melt (PO-RHM) adhesives typically consist mainly of amorphous poly-α-olefins (APAOs), which have been functionalized with silane groups. When contacted with water, the silane groups of the polyolefin polymers, such as methoxysilane groups, react with water to form silanols, which subsequently undergo reaction with other silanol groups to form covalent bonds between individual polymer molecules as part of a condensation reaction.

Both reactive and non-reactive hot-melt adhesives have been widely used in industry for producing composite elements by film laminating techniques. In a typical thin film lamination process, a hot-melt adhesive is first applied in a molten state to a surface of a first substrate to form an adhesive film, which is then contacted with a surface of a second substrate to create an adhesive bond between the two substrates. A conventional hot-melt adhesive exhibits a relatively short open time and when applied as thin film to a surface of a substrate, the adhesive rapidly solidifies and loses its ability to wet the surface of the second substrate.

A significant disadvantage of the conventional moisture curing hot-melt adhesives is that the speed of the curing reactions is limited by the availability of water. Consequently, in moisture curing adhesive systems the curing time of the adhesive, i.e., the time required for the adhesive to reach a fully cured state, is relatively long. This is a significant disadvantage especially in automotive assembly processes, where the laminated parts are not stored but immediately used in another part of the process. Furthermore, in case of thicker adhesive layers, the curing reactions are severely limited by the diffusion of moisture in the adhesive layer resulting in formation of curing gradients and increased curing time.

It would therefore be desirable to provide a novel type of reactive hot-melt adhesive that is more suitable for use in industrial assembly processes, particularly in application by lamination techniques. The adhesive should preferably have an adjustable curing behavior, where the curing time and the start of the curing reactions can be adjusted independently of prevailing environmental conditions, particularly independently of the environmental temperature and relative humidity.

### Summary of the invention

The object of the present invention is to provide a reactive hot-melt adhesive composition, which overcomes or at least mitigates the disadvantages of the prior art reactive hot-melt adhesives as discussed above.

Particularly, it is an object of the present invention to provide a reactive hot-melt adhesive composition having adjustable curing behavior in terms of activation temperature and curing time. The adhesive composition should preferably exhibit improved storage stability and be obtained using a more reliable/stable and safer production process.

Surprisingly it has been found out that the objects can be achieved with the features of claim 1.

Specifically, according to the invention, a hot-melt adhesive composition is proposed, the composition comprising:
a) A blocked polyurethane prepolymer PU,
b) At least one isocyanate-reactive compound P,
c) At least one thiol compound T, and
d) At least one metal catalyst **C** that can catalyze reactions between isocyanate groups and isocyanate reactive groups and that can build thiol complexes,

wherein the blocked polyurethane prepolymer **PU** is a polyurethane prepolymer of the formula (I) 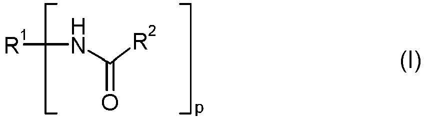
where R¹ is a p-valent radical of a linear or branched isocyanate-terminated polyurethane polymer after the removal of the isocyanate groups;
p has a value of 2 to 8; and
R² is a blocking group which is eliminated at a temperature of at or above 100 °C.

As it turned out, a combination of a blocked polyurethane prepolymer, an isocyanate-reactive compound, and a special catalyst system comprising a metal catalyst and a complexing agent having at least one thiol group enables providing a reactive hot-melt adhesive having an adjustable curing behavior. Particularly, such hot-melt adhesives have a larger application window since the activation temperature can be tailored according to application requirements. Furthermore, since polyurethane prepolymers having blocked isocyanate groups are used, the adhesive can be prepared by using a more reliable/stable and safer production process. It also turned out that the hot-melt adhesive composition has an excellent storage stability, even at higher temperatures.

Additional aspects of the present invention are presented in further independent claims. Preferred embodiments of the invention are outlined throughout the description and the dependent claims.

### Detailed description of the invention

The subject of the present invention is a hot-melt adhesive composition comprising:
a) A blocked polyurethane prepolymer **PU,**
b) At least one isocyanate-reactive compound **P,**
c) At least one thiol compound **T,** and
d) At least one metal catalyst **C** that can catalyze reactions between isocyanate groups and isocyanate-reactive groups and that can build thiol complexes,

wherein the blocked polyurethane prepolymer **PU** is a blocked polyurethane prepolymer of the formula (I) 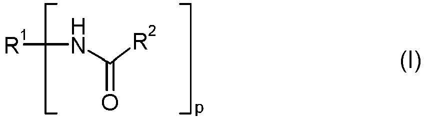
where R¹ is a p-valent radical of a linear or branched isocyanate-terminated polyurethane polymer after the removal of the isocyanate groups;
p has a value of 2 to 8; and
R² is a blocking group which is eliminated at a temperature of at or above 100 °C, preferably at or above 110 °C.

The prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

An isocyanate is called "aliphatic" when its isocyanate group is directly bound to an aliphatic, cycloaliphatic or arylaliphatic moiety. The corresponding functional group is therefore called an aliphatic isocyanate group. Furthermore, an isocyanate is called "aromatic" when its isocyanate group is directly bound to an aromatic moiety. The corresponding functional group is therefore called an aromatic isocyanate group.

The term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

The term "molecular weight" refers to the molar mass (g/mol) of a molecule or a part of a molecule, also referred to as "moiety". The term "average molecular weight" refers to the number average molecular weight (Mₙ) of an oligomeric or polymeric mixture of molecules or moieties. The molecular weight can be determined by conventional methods, preferably by gel permeation- chromatography (GPC) using polystyrene as standard, styrenedivinylbenzene gel with porosity of 100 Angstrom, 1000 Angstrom and 10000 Angstrom as the column, and depending on the molecule, tetrahydrofurane as a solvent, at a temperature of 35°C or 1 ,2,4-trichlorobenzene as a solvent, at 160 °C.

The term "softening point" or "softening temperature" designates a temperature at which compound softens in a rubber-like state, or a temperature at which the crystalline portion within the compound melts. The softening point can be measured by a Ring and Ball method according to DIN EN 1238:2011 standard.

The term "glass transition temperature" (T_{g}) designates the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The term "melting temperature" refers to a temperature at which a material undergoes transition from the solid to the liquid state. The melting temperature (Tₘ) is preferably determined by differential scanning calorimetry (DSC) according to ISO 11357-3:2018 standard using a heating rate of 2 °C/min. The measurements can be performed with a Mettler Toledo DSC 3+ device and the Tₘ values can be determined from the measured DSC-curve with the help of the DSC- software. In case the measured DSC-curve shows several peak temperatures, the first peak temperature coming from the lower temperature side in the thermogram is taken as the melting temperature (Tₘ).

The term "open time" designates the length of a time period during which an adhesive applied to a surface of a substrate is still able to form an adhesive bond after being contacted with another substrate.

The "amount or content of at least one component X" in a composition, for example "the amount of the at least one thermoplastic polymer TP" refers to the sum of the individual amounts of all thermoplastic polymers TP contained in the composition. For example, in case the composition comprises 20 wt.-% of at least one thermoplastic polymer TP, the sum of the amounts of all thermoplastic polymers TP contained in the composition equals 20 wt.-%.

The term "room temperature" refers to a temperature of ca. 23 °C.

In this document, the use of the term "independently" in connection with substituents, radicals, or groups should be interpreted such that the substituents, radicals, or groups having the same designation in the same molecule may occur simultaneously with different meanings.

Preferably, R² is independently a substituent selected from the group consisting of 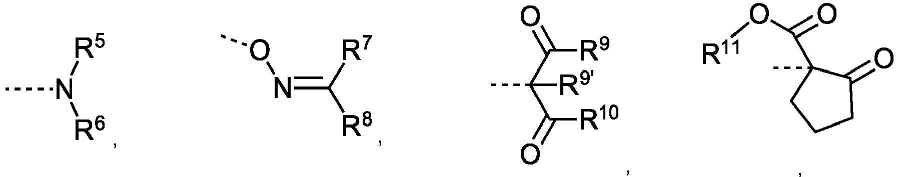 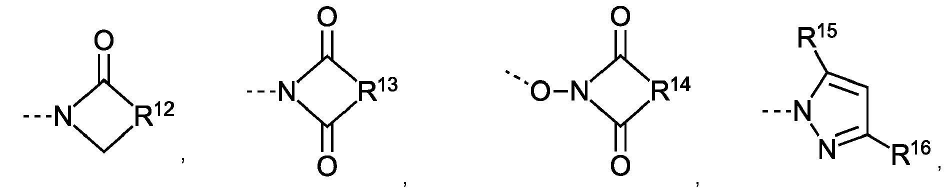 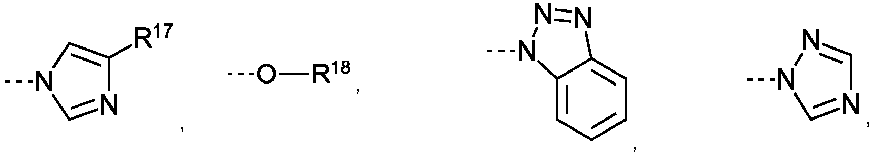 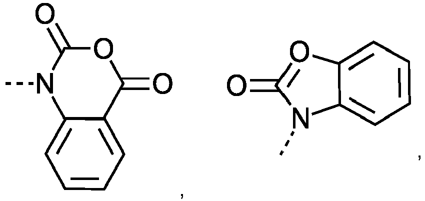 where R⁵, R⁶, R⁷ and R⁸ are each independently an alkyl or cycloalkyl or aralkyl or arylalkyl group, or R⁵ together with R⁶, or R⁷ together with R⁸, form part of a 4- to 7-membered, optionally substituted ring.

In addition, R⁹, R^{9'}, and R¹⁰ are each independently a hydrogen atom, an alkyl or aralkyl or arylalkyl group or an alkyloxy or aryloxy or aralkyloxy group, and R¹¹ is an alkyl group.

R¹², R¹³, and R¹⁴ are each independently an alkylene group which has 2 to 5 carbon atoms and optionally has double bonds or is substituted, or a phenylene group or a hydrogenated phenylene group.

Finally, R¹⁵, R¹⁶ and R¹⁷ are each independently a hydrogen atom or an alkyl group or an aryl group or an aralkyl group, and R¹⁸ is an aralkyl group or a mono- or polycyclic, substituted or unsubstituted aromatic group that optionally has aromatic hydroxyl groups.

More preferably, R² is independently a substituent selected from the group consisting of 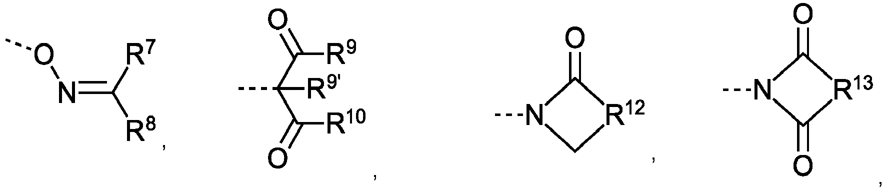 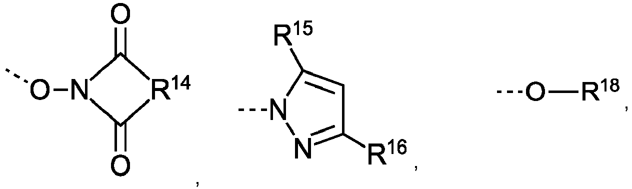 more preferably from the group consisting of

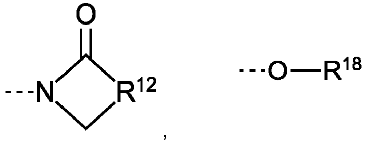

Preferred substituents of the formula ---O-R¹⁸ are phenols after removal of a phenolic hydrogen atom and hydroxybenzyl alcohol and benzyl alcohol after removal of a hydroxyl group.

In one or more embodiments, the substituent R² in formula (I) is a phenol after removal of a phenolic hydrogen atom or a ε-caprolactam after removal of the nitrogen-bound hydrogen atom.

Especially preferred substituents of the formula ---O-R¹⁸ are monophenols after removal of a phenolic hydrogen atom. Particularly preferred examples of these substituents are radicals selected from the group consisting of 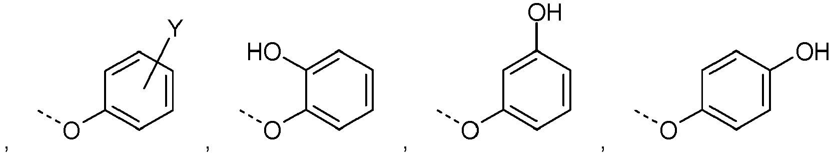 and 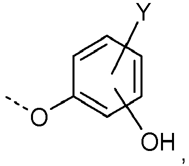 particularly

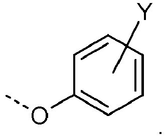

The Y radical is preferably a saturated, aromatic, or olefinically unsaturated hydrocarbyl radical having 1 to 20 carbon atoms, especially having 1 to 15 carbon atoms. Preferred Y are especially allyl, methyl, nonyl, dodecyl, phenyl, alkyl ether, especially methyl ether, carboxylic ester or an unsaturated C₁₅-alkyl radical having 1 to 3 double bonds. Most preferably, Y is selected from the group consisting of alkyl ether, especially methyl ether, and unsaturated C₁₅-alkyl radical having 1 to 3 double bonds.

In one or more embodiments, the substituent R² in formula (I) is a monophenol after removal of a phenolic hydrogen atom, preferably selected from phenol (monohydroxybenzene), cresol, 4-methoxyphenol (HQMME), resorcinol, catechol, cardanol (from cashew nutshell oil), and nonylphenol, or a ε-caprolactam after removal of the nitrogen-bound hydrogen atom.

In or more embodiments, the hot-melt adhesive composition comprises 50 - 95 wt.-%, more preferably 60 - 90 wt.-%, even more preferably 65 - 85 wt.-% of the blocked polyurethane prepolymer **PU.**

Especially, the blocked polyurethane prepolymer **PU** is obtained from reacting a polyurethane prepolymer **PUP** having terminal isocyanate groups and at least one isocyanate-reactive blocking agent **B** of formula R²H.

In this document, the term "polyurethane polymer" refers to polymers prepared by the so called diisocyanate polyaddition process. These also include those polymers which are virtually or entirely free from urethane groups. Examples of polyurethane polymers are polyether-polyurethanes, polyester-polyurethanes, polyether-polyureas, polyureas, polyester-polyureas, polyisocyanurates and polycarbodiimides.

Furthermore, the term "polyurethane prepolymer" designates isocyanate-functional polyurethane polymers comprising unreacted isocyanate groups. The polyurethane prepolymers can be obtained by reacting excess of polyisocyanates, particularly diisocyanates, with polyols. They are isocyanate-terminated, i.e., comprise unreacted isocyanate groups at the chain ends. The terms "isocyanate-functional polyurethane polymer" and "polyurethane prepolymer" can be used interchangeably.

In one or more embodiments, the polyurethane prepolymer **PUP** is obtained by reacting at least one polyol **PO** with at least one diisocyanate **I** at a molar ratio of isocyanate groups to hydroxyl groups of at least 3 preferably at least 3.5 and optionally subjecting the thus obtained reaction mixture to a treatment to reduce the amount of residual monomeric diisocyanates, preferably by distillation.

The reaction between polyol **PO** and diisocyanate **I** may, for example, be carried out at temperatures in the range of 60 - 160 °C, preferably 80 - 140 °C, optionally in the presence of a catalyst. The reaction time, as will be appreciated, depends on the temperature employed, but may, for example, be in the range of from 30 minutes to 6 hours, preferably from 30 minutes to 3 hours, more preferably from 30 minutes to 1.5 hours. Suitable catalysts include, for example, metal catalysts, such as Coscat^{®}83 (from Vertellus Performance Materials Inc.), and tin catalysts.

In one or more embodiments, the polyurethane prepolymer **PUP** has an average isocyanate- functionality determined according to ISO 14896-2009 standard method A in the range of 1.2 - 3.0, preferably 1.5 - 2.5 and/or an isocyanate content determined by using the method as defined in ISO 11909:2007 standard in the range of 0.5 - 25 wt.-%, preferably 1.0 - 20 wt.-%.

Especially suitable diisocyanates **I** include monomeric aliphatic, cyclo-aliphatic, and aromatic diisocyanates.

The term "monomeric diisocyanate" refers in the present document to an organic compound with two isocyanate groups that are separated by a divalent hydrocarbon radical, preferably having an average molecular weight of not more than 1000 g/mol. Particularly, a monomeric diisocyanate contains no urethane groups and oligomers or polymer products of diisocyanate monomers, such as adducts of monomeric diisocyanates, are not considered to be "monomeric diisocyanates" in the context of the present invention.

Preferably, the diisocyanate **I** is a monomeric diisocyanate, more preferably a monomeric diisocyanate having a number average molecular weight (Mₙ) of not more than 750 g/mol, preferably not more than 500 g/mol, more preferably not more than 350 g/mol.

Examples of suitable monomeric diisocyanates include aliphatic and aromatic monomeric diisocyanates, for example, 1,6-hexamethylene diisocyanate (HDI), 2-methylpentamethylene 1,5-diisocyanate, 2,2,4- and 2,4,4-trimethyl-1,6-hexamethylene diisocyanate (TMDI) and mixtures of these isomers, 1,10 decamethylene diisocyanate, 1,12-dodecamethylene diisocyanate, lysine diisocyanate, lysine ester diisocyanate, cyclohexane 1,3-diisocyanate and cyclohexane 1,4-diisocyanate and mixtures of these isomers, 1-methyl-2,4- and -2,6-diisocyanatocyclohexane and mixtures of these isomers (HTDI or H6TDI), 1-isocyanato-3,3,5-trimethyl-5-isocyanatomethylcyclohexane (= isophoronediisocyanate or IPDI), perhydro-2,4'- and -4,4'-diphenylmethane diisocyanate (HMDI or H12MDI) and mixtures of these isomers, 1,4- diisocyanato-2,2,6-trimethylcyclohexane (TMCDI), 1,3- and 1,4-bis(isocyanato-methyl)cyclohexane, m- and p-xylylene diisocyanate (m- and p-XDI) and mixtures of these isomers, m- and p-tetramethyl-1,3- and 1,4-xylylene diisocyanate (m- and p-TMXDI) and mixtures of these isomers, bis(1-isocyanato-1-methylethyl)naphthalene, 2,4- and 2,6-tolylene diisocyanate and mixtures of these isomers (TDI), 4,4'-diphenylmethane diisocyanate, optionally with proportions of 2,4'- and/or 2,2'-diphenylmethane diisocyanate (MDI), 1,3- and 1,4-phenylene diisocyanate (PDI) and mixtures of these isomers, naphthalene 1,5-diisocyanate (NDI), 3,3'-dimethyl-4,4'-diisocyanatobiphenyl (TODI), and dianisidine diisocyanate (DADI).

Suitable aliphatic and aromatic monomeric diisocyanates are commercially available, for example, under the trade names of Lupranat^{®} (from BASF), Desmodur^{®} (from Covestro), and Duranate^{®} (from Asahi Kasei).

In one or more embodiments, the at least one diisocyanate **I** is selected from 4,4'-diphenylmethane diisocyanate (4,4'-MDI), 2,4'-diphenylmethane diisocyanate (2,4'-MDI), 2,2'-diphenylmethane diisocyanate (2,2' MDI), or mixtures of these isomers, tolylene diisocyanate (TDI), particularly 2,4-tolylene diisocyanate (2,4 TDI), 2,6-tolylene diisocyanate (2,6 TDI), or mixtures of these isomers, 1,6-hexamethylene diisocyanate (HDI), and 1-isocyanato-3,3,5-trimethyl-5-isocyanatomethylcyclohexane (IPDI). Furthermore, a person skilled in the art knows that the technical grade monomeric diisocyanates may come in the form of isomer mixtures and may contain oligomers as impurities.

Suitable polyols **PO** include, particularly, polyester polyols, polyether polyols, polycarbonate polyols, and poly(tetramethylene ether)glycol.

Preferred polyester polyols include liquid, amorphous, partially crystalline, and crystalline polyester polyols. These can be obtained from by reacting dihydric and trihydric, preferably dihydric, alcohols, for example, 1,2-ethanediol, diethylene glycol, triethylene glycol, 1,2-propanediol, 1,3-propanediol, dipropylene glycol, 1,4-butanediol, 1,5-pentanediol, 1,6-hexanediol, 1,8-octanediol, 1,10-decanediol, 1,12-dodecanediol, dimer fatty alcohol, neopentyl glycol, glycerol, 1,1,1-trimethylolpropane or mixtures of the aforesaid alcohols, with organic dicarboxylic acids or tricarboxylic acids, preferably dicarboxylic acids, or their anhydrides or esters, such as succinic acid, glutaric acid, 3,3-dimethylglutaric acid, adipic acid, suberic acid, sebacic acid, undecanedioic acid, dodecanedicarboxylic acid, azelaic acid, maleic acid, fumaric acid, phthalic acid, dimer fatty acid, isophthalic acid, terephthalic acid, and hexahydrophthalic acid, or mixtures of the aforesaid acids, and also polyester polyols made from lactones such as from ε-caprolactone, for example, also known as polycaprolactones.

Preferred polyester polyols include those obtained by reacting adipic acid, sebacic acid or dodecanedicarboxylic acid as dicarboxylic acid and hexanediol or neopentyl glycol as dihydric alcohol. Further examples of suitable polyester polyols include polyester polyols of oleochemical origin. Polyester polyols of this type may be prepared, for example, by complete ring opening of epoxidized triglycerides of a fat mixture comprising at least partially olefinically unsaturated fatty acids, with one or more alcohols having 1-12 carbon atoms, and by subsequent partial transesterification of the triglyceride derivatives to give alkyl ester polyols having 1-12 carbon atoms in the alkyl radical. Particularly suitable crystalline or semicrystalline polyester polyols include adipic acid/hexanediol polyester and dodecanedicarboxylic acid/hexanediol polyesters.

Particularly suitable polyether polyols include polyoxyalkylenepolyols.

These are products of the polymerization of ethylene oxide, 1,2-propylene oxide, 1,2- or 2,3-butylene oxide, oxetane, tetrahydrofuran or mixtures thereof, optionally polymerized using a starter molecule with two or more active hydrogen atoms, such as water, ammonia or compounds with several OH- or NH-groups, such as 1,2-ethanediol, 1,2- and 1,3-propanediol, neopentylglycol, diethyleneglycol, triethyleneglycol, the isomeric dipropylene-glycols and tripropyleneglycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, as well as mixtures of the above-mentioned compounds.

Preferred are both polyoxyalkylenepolyols with a low degree of unsaturation (measured according to ASTM D-2849-69 and indicated in milliequivalents of unsaturation per gram of polyol (meq/g)), obtainable, for example, by using so-called double metal cyanide complex catalysts (DMC catalysts), and polyoxyalkylenepolyols with a higher degree of unsaturation, obtainable, for example, by using anionic catalysts such as NaOH, KOH, CsOH or alkali alcoholates. Particularly preferred polyoxyalkylenepolyols are polymerization products of ethylene oxide and/or propylene oxide.

Particularly suitable polyether polyols include polyoxyalkylene diols and poly-oxyalkylene triols, especially polyoxyethylene diols and triols and polyoxypropylene diols and triols, preferably having a number average molecular weight (Mₙ) in the range of 400 - 15000 g/mol, especially 500 - 10000 g/mol.

Likewise particularly suitable polyether polyols are what are known as ethylene oxide-terminated ("EO-endcapped", ethylene oxide-endcapped) polyoxypropylene polyols. The latter are special polyoxypropylene polyoxyethylene polyols that are obtained for example when pure polyoxypropylene polyols, especially polyoxypropylene diols and triols, are at the end of the polypropoxylation reaction further alkoxylated with ethylene oxide and thus have primary hydroxyl groups. Preference in this case is given to polyoxypropylene polyoxyethylene diols and polyoxypropylene polyoxyethylene triols.

Suitable polyether polyols are commercially available, for example, under the trade name of Acclaim^{®}, Desmophen^{®}, and Arcol^{®} (all from Covestro); under the trade name of Voranol^{®} (from Dow); and under the trade name of Dianol^{®} (from Arkema).

Further particularly preferred polyols are polycarbonate polyols, particularly products of the polycondensation of dialkyl carbonates, diaryl carbonates or phosgene with diols or triols such as ethylene glycol, diethylene glycol, propylene glycol, dipropylene glycol, neopentyl glycol, 1,4-butanediol, 1,5-pentanediol, 3-methyl-1,5-hexanediol, 1,6-hexanediol, 1,8-octanediol, 1,10-decanediol, 1,12-dodecanediol, 1,12-octadecanediol, 1,4-cyclohexane dimethanol, dimeric fatty acid diol (dimeryl diol), hydroxypivalic neopentylglycol ester, glycerol and 1,1,1-trimethylolpropane.

Along with the above-mentioned polyols, small amounts of low molecular weight divalent or multivalent alcohols can be used, such as 1,2-ethanediol, 1,2-propanediol, neopentyl glycol, diethylene glycol, triethylene glycol, the isomeric dipropylene glycols and tripropylene glycols, the isomeric butanediols, pentanediols, hexanediols, heptanediols, octanediols, no-nanediols, decanediols, undecanediols, 1,3- and 1,4-cyclohexanedimethanol, hydrogenated bisphenol A, dimer fatty alcohols, 1,1,1-trimethylolethane, 1,1,1-trimethylolpropane, glycerol, pentaerythritol, sugar alcohols, such as xylitol, sorbitol or mannitol, sugars, such as saccharose, other polyhydric alcohols, low molecular weight alkoxylation products of the above-mentioned divalent or multivalent alcohols, as well as mixtures of the above-mentioned alcohols.

In one or more embodiments, the polyurethane prepolymer **PUP** has a content of monomeric diisocyanates of not more than 1.0 wt.-%, preferably not more than 0.5 wt.-%, more preferably not more than 0.25 wt.-%, based on the total weight of the polyurethane prepolymer **PUP.**

Such polyurethane prepolymers **PUP** can be obtained, for example, by subjecting the reaction product of the least one polyol **PO** and the at least one diisocyanate **I** to a treatment to reduce the amount of residual monomeric diisocyanates, particularly by distillation. Suitable distillation processes include, for example, thin film distillation and molecular distillation.

In one or more embodiments, the hot-melt adhesive composition has a content of monomeric diisocyanates of less than 1.0 wt.-%, preferably less than preferably less than 0.65 wt.-%, more preferably less than 0.5 wt.-%, even more preferably less than 0.35 wt.-%, most preferably less than 0.1 wt.-%, based on the total weight of the hot-melt adhesive composition. Adhesive compositions having a content of monomeric diisocyanates of less than 0.1 wt.-% are safe to use even without special protective measures and can, therefore, be sold in many countries without being labeled as harmful (Xn).

The hot-melt adhesive composition comprises as a second compulsory compound at least one isocyanate-reactive compound **P.** The term "isocyanate-reactive" refers here to compounds having one or more functional groups that can react with isocyanate groups.

Especially suitable isocyanate-reactive compounds include compounds having at least two isocyanate-reactive groups per molecule, preferably selected from amine groups, hydroxyl groups, and thiol groups, such as polyester polyols, polyether polyols, polycarbonate polyols, and polyether amines, preferably having a number average molecular weight (Mₙ) of not more than 30000 g/mol, more preferably not more than 20000 g/mol.

In one or more embodiments, the isocyanate- reactive compound **P** is selected from polyether polyols and polyether amines, preferably having a number average molecular weight (Mₙ) of 250 - 15000 g/mol, more preferably 350 - 10000 g/mol and/or having on average 2 - 6, preferably 3-6 isocyanate reactive groups per molecule.

In one or more embodiments, the hot-melt adhesive composition comprises 0.5 -45 wt.-%, more preferably 1.5 - 35 wt.-%, even more preferably 5 - 30 wt.-%, still more preferably 5 - 25 wt.-% of the isocyanate-reactive compound **P.**

The hot-melt adhesive composition further comprises, in addition to the blocked polyurethane polymer **PU** and the isocyanate-reactive compound **P,** a catalyst system comprising at least one thiol compound **T** and at least one metal catalyst **C** that can catalyze reactions between isocyanate groups and isocyanate-reactive groups and that can build thiol complexes.

The presence of such a catalyst system in the hot-melt adhesive composition has been found out, in combination with the blocked polyurethane prepolymers, to enable providing hot-melt adhesive compositions having an adjustable curing behavior, where curing time and the start of the curing reactions can be adjusted according to application requirements and independently of the prevailing environmental conditions. Furthermore, the use of the catalyst system has been found out to result in improved storage stability of the adhesive composition.

Preferably, the at least one thiol compound **T** contains on average 1 - 5, more preferably 2 - 4 thiol groups per molecule.

In one or more embodiments, the at least one thiol compound **T** is selected from ethylene glycol di(3-mercaptopropionate), ethylene glycol di(2-mercaptoacetate), trimethylolpropane tri(3-mercaptopropionate), trimethylolpropane tri(2-mercaptoacetate), pentaerythritol tetra(3-mercaptopropionate), pentaerythritol tetra(2-mercaptoacetate), dipentaerythritol hexa(3-mercaptopropionate), dipentaerythritol hexa(2-mercaptoacetate), 2,3-dimercapto-1,3,4-thiadiazole, and 3,6-dioxa-1,8-octanedithiol.

Examples of suitable metal catalysts **C** include bismuth, zinc, tin, and zirconium compounds, including complexes and salts of these metals.

In one or more embodiments, the metal catalyst **C** is selected from bismuth compounds, tin compounds, and zirconium compounds.

Especially suitable bismuth compounds include bismuth(III) compounds, such as bismuth carboxylates, for example bismuth acetate, oleate, octoate or neodecanoate, bismuth nitrate, bismuth halides such as the bromide, chloride, or iodide, bismuth sulfide, basic bismuth carboxylates such as bismuthyl neodecanoate, bismuth subgallate or bismuth subsalicylate, and mixtures thereof. Particularly preferred bismuth compounds are the bismuth carboxylates, particularly bismuth neodecanoate.

Particularly preferred tin compounds include organotin compounds, especially organotin(IV) compounds, preferably selected from dibutyltin diacetate, dibutyltin dilaurate, dibutyltin dichloride, dibutyltin diacetylacetonate, dimethyltin dilaurate, dioctyltin diacetate, dioctyltin dilaurate, dioctyltin diacetylacetonate, bis[(2-ethyl-1-oxohexyl)oxy]dioctylstannane, bis(neodecanoyloxy)dioctylstannane, bis(dodecylthio)dioctylstannane, and bis(dodecylthio)dimethylstannane.

In one or more embodiments, the metal catalyst **C** is a bismuth(III) complex containing at least one ligand based on 8-hydroxyquinoline or a bismuth(III) complex containing at least one ligand based on a 1,3-ketoamide.

Examples of a bismuth(III) complex containing at least one ligand based on 8-hydroxyquinoline are described in EP 1551895 A1. Such compound is preferably a bismuth(III) carboxylate containing one molar equivalent of an 8-hydroxyquinoline ligand.

Examples of bismuth(III) complex containing at least one ligand based on a 1,3-ketoamide are described in EP 2791153. Such compound is preferably a bismuth(III) carboxylate containing 1 to 3 molar equivalents of a 1,3-ketoamide ligand.

Preferably, the molar ratio of all thiol groups in the at least one thiol compound **T** to all metal atoms in the at least one metal catalyst **C** is from 1:1 to 20:1, preferably from 4:1 to 16:1.

The molar ratios between thiol groups of the thiol compound **T** and the metal atoms of the catalyst **C** falling within the above cited ranges allows controlling the curing time of the hot-melt adhesive composition, specifically within the intrinsic limits of the particular composition, by, for example, adjusting the content of the catalyst, the reactivity of the polyisocyanates and isocyanate reactive compounds present in the adhesive composition, and the amounts thereof.

The hot-melt adhesive composition can further comprise auxiliary substances and additives, for example, those selected from the group consisting of fillers, flame retardants, plasticizers, adhesion promoters, UV absorption agents, UV and heat stabilizers, optical brighteners, pigments, dyes, and desiccants. Examples of suitable UV stabilizers that can be added to the adhesive composition include, for example, sterically hindered phenols.

Suitable fillers for use in the hot-melt adhesive composition include, for example, inorganic and organic fillers, especially natural, ground or precipitated calcium carbonates, optionally coated with fatty acids or fatty acid esters, especially stearic acid, baryte (heavy spar), talcs, quartz flours, quartz sand, dolomites, wollastonites, kaolins, calcined kaolins, mica (potassium aluminum silicate), molecular sieves, aluminum oxides, aluminum hydroxides, magnesium hydroxide, silicas including finely divided silicas from pyrolysis processes, industrially produced carbon blacks, graphite, metal powders such as aluminum, copper, iron, silver or steel, PVC powder or hollow spheres.

The hot-melt adhesive composition as described above can be prepared by melt mixing the blocked polyurethane prepolymer **PU,** the isocyanate reactive compound **P,** the thiol compound **T,** and the metal catalyst **C** at an elevated temperature to obtain a homogeneously mixed mixture.

The term "melt-mixing" refers in the present disclosure to a processing operation wherein a polymer is heated above its melting point/softening point in order to mix or blend other materials, such as other polymers, into the polymer.

Melt-mixing of the constituents can be conducted using any conventional mixing apparatus, such as a dispersion mixer, planetary mixer, such as planetary roller, extruder such as a twin-screw extruder, kneader, such as a Buss, Banbury, or roller kneader, or a two-roll mill.

The term "homogeneously mixed mixture" refers in the present disclosure to compositions, in which the individual constituents are distributed substantially homogeneously in the composition. Furthermore, a homogeneously mixed mixture can be a multi-phase mixture. For a person skilled in the art it is clear that within homogeneously mixed compositions there may be regions formed, which have a slightly higher concentration of one of the constituents than other regions and that a 100 % homogeneous distribution of all the constituents is generally not achievable. Such mixed compositions with "imperfect" distribution of constituents, however, are also intended to be included by the term "homogeneously mixed mixture" in accordance with the present invention.

The hot-melt adhesive composition can be prepared by using a method comprising:
- melting the polyurethane prepolymer **PUP** in a reactor,
- adding the blocking agent **B** and a first portion of the metal catalyst **C** in the reactor,
- conducing the reaction between prepolymer **PUP** and blocking agent **B** to obtain a reaction mixture comprising a blocked polyurethane prepolymer **PU,**
- adding the isocyanate-reactive compound **P** to the reaction mixture, and
- adding the thiol compound **T** and a second portion of the metal catalyst **C** to the thus obtained mixture.

Alternatively, the hot-melt adhesive composition can be prepared by using an analogous method in which the blocked polyurethane prepolymer **PU** is made in a separate reactor and optionally stored before being mixed with the isocyanate-reactive compound **P,** the thiol compound **T** and the metal catalyst **C.**

Another aspect of the present invention is use of the hot-melt adhesive composition as described above as an assembly adhesive, laminating adhesive, or as an adhesive for the building of sandwich elements.

Still another aspect of the present invention is a method for adhesively bonding a first substrate to a second substrate, the method comprising steps of:
I) Heating a hot-melt adhesive composition as described above to provide a melted adhesive composition,
II) Applying the melted adhesive composition to a surface of the first substrate to form an adhesive film,
III) Heating the adhesive film to a reactivation temperature, and
IV) Mating the first substrate obtained from step II) or III) with a second substrate such that a surface of the second substrate is contacted with the adhesive film,
V) Optionally applying a pressure on the first and/or second substrate.

The melted adhesive composition can be applied on the surface of the first substrate using any conventional technique, for example, by slot die coating, roller coating, extrusion coating, calender coating, or spray coating. Typical application temperatures for the hot-melt adhesive composition are in the range of 80 - 135 °C, preferably 80 - 125 °C, particularly 80 - 110 °C.

The temperature to which the adhesive film is heated in step III), i.e. the reactivation temperature, depends on the embodiment of the adhesive composition, particularly on the elimination temperature of the blocking group R².

In one or more embodiments, the adhesive composition is heated in step III) to a temperature of 150 °C or above, preferably 160 °C or above, especially 150 - 220 °C, preferably 150 - 200 °C.

The heating of the adhesive film can be conducted using any conventional technique, such as heating in an oven, heating by air stream, or heating with infrared (IR)-radiation.

After the adhesive film has been contacted with the surface of the second substrate, the adhesive composition develops a certain initial adhesive strength by physical curing upon cooling. The chemical curing of the adhesive begins after elimination of the blocking groups of the blocked polyurethane prepolymer **PU.** However, the speed of the curing reactions remains very slow as long as the metal catalyst **C** forms a thiol complex with the thiol compound **T.**

One of the advantages of the present invention is that the curing of the adhesive does not start before the adhesive has been heated to an activation temperature, i.e., above the elimination temperature of the blocking groups R² of the blocked polyurethane prepolymer **PU.**

Consequently, pre-coated adhesive elements composed of the first substrate and the adhesive film can be stored for an arbitrary period of time at normal room conditions before being used in a production process. In case of a normal moisture-curing adhesive composition, the adhesive film would have to be contacted with another substrate almost immediately after having been coated with the adhesive, at least within the open time of the adhesive, since the moisture induced curing reactions are initiated as soon as the adhesive film is contacted with atmospheric moisture.

The hot-melt adhesive composition as described above is thus especially suitable for use in industrial lamination processes, where the substrates are preferably precoated with the adhesive and stored temporarily for days or even months before being used for building of composite elements.

The first and second substrates can be composed of any conventional material including polymeric material, metal, painted metal, glass, wood, wood derived materials such as natural fiber polypropylene (NFPP), and fiber-based materials. Suitable polymeric materials include, for example, non-foamed and foamed polyethylene (PE), particularly high density polyethylene (HDPE), polypropylene (PP), propylene copolymers, glass-fiber reinforced polypropylene (GFPP), polyvinyl chloride (PVC), polyethylene terephthalate (PET), polystyrene (PS), polycarbonate (PC), polymethylmethacrylate (PMMA), acrylonitrile butadiene styrene (ABS), polyamide (PA), thermoplastic olefin elastomers (TPO), and combinations thereof. Suitable fiber-based materials include, for example, woven and non-woven fabrics, particularly comprising synthetic organic fibers.

Furthermore, the first and second substrates can be composed of a single layer or of multiple layers of different types of materials. The layer(s) composed of polymeric materials can further contain additives such as fillers, plasticizers, flame retardants, thermal stabilizers, antioxidants, pigments, dyes, and biocides.

Still another aspect of the present invention is a composite element obtainable by using the method for adhesively bonding a first substrate to a second substrate as described above.

The composite element of the present invention can be used, for example, for providing interior lining components of automotive vehicles. Examples of such interior lining components include door panel pieces, switch panels, rear parcel shelves, head liners, sliding roofs, center consoles, glove compartments, sun visors, pillars, door handles, arm rests, flooring, cargo flooring, and trunk area flooring as well as sleeping cabins and rear panels of trucks.

### Examples

The followings commercially available products shown in Table 1 were used in the examples.

**Table 1**

| **Name** | **Chemical description** | **Supplier** |
|---|---|---|
| Polyol **PO1** | Polyether polyol (homopolymer diol), molecular weight 400 g/mol, hydroxyl number 250 - 300 mg KOH/g (EN ISO 4629-2) | Dow |
| Polyol **PO2** | Polyether polyol (homopolymer diol), molecular weight 2000 g/mol, hydroxyl number 50 - 60 mg KOH/g (EN ISO 4629-2) | Kuraray |
| Diisocyanate **I** | Monomeric diphenylmethane-4,4'-diisocyanate (MDI) | Covestro |
| Blocking agent **B** | ε-caprolactam | Sigma Aldrich |
| Compound **P1** | Trifunctional polyether polyol, hydroxyl number 550-575 mg KOH/g | Covestro |
| Compound **P2** | Trifunctional polyether amine, average molecular weight ca. 440 g/mol | Huntsman |
| Thiol compound **T** | Glycol di(3-mercaptopropionate) | Bruno Bock |
| Metal catalyst **C** | Organobismuth compound | Vertellus Performance Materials |

The adhesive compositions presented in Table 2 were prepared according to the procedures as presented below.

### Preparation of polyurethane prepolymers PUP1 and PUP2

The polyol **PO1** or **PO2** was charged into a stainless-steel reactor and kept under vacuum with stirring at 140 °C for 120 minutes to dewater the component. The temperature of the mixture was lowered to 120 °C and the diisocyanate **I** was added at a molar ratio of isocyanate groups to hydroxyl groups of 4 under a nitrogen blanket. The thus obtained starting mixture was then reacted with stirring for 45 minutes under vacuum at a temperature of 120 °C to obtain a reaction mixture containing a reaction product of the diisocyanate and the polyol and some unreacted diisocyanate **I.**

The thus obtained reaction mixture was distilled with a short pass evaporator (jacket temperature 170 to 180 °C, pressure 0.05 to 0.002 mbar, condensation temperature 47°C) to reduce the content of volatile compounds, particularly the content of unreacted (residual) diisocyanates. The obtained polyurethane prepolymers **PUP1** and **PUP2** had an NCO content determined by using the method as defined in ISO 11909:2007 standard of 7.6 and 2.9 wt.-%, respectively, and a residual diisocyanate monomer content of 0.15 - 0.2 wt-%. The prepolymers were stored at room temperature under exclusion of moisture before use for preparation of blocked polyurethane prepolymers.

### Preparation of blocked polyurethane prepolymers PU1 and PU2

The prepolymer **PUP1** or **PUP2** was first melted in oven at 90 °C. The melted prepolymer was charged into a stainless steel reactor and kept under stirring in the reactor at 110 °C for 30 minutes. The blocking agent **B** and a portion of the amount of the metal catalyst **C** as shown in Table 2 were then added and the reaction was conducted under continued stirring at 110 °C for one hour. The obtained blocked polyurethane prepolymers **PU1** and **PU2** were free from isocyanate groups as determined by FT-IR spectroscopy.

### Preparation of hot-melt adhesive compositions

The blocked prepolymer **PU1** or **PU2** was first charged into a stainless steel reactor and melted at 100 °C. The isocyanate-reactive compound **P1** or **P2,** the thiol compound **T,** and the rest of the amount of the metal catalyst **C** as shown in Table 2 were then added to the reactor and the thus obtained mixture was kept under stirring at 110 °C for one hour.

### Measurement methods

The adhesive compositions were characterized using the following measurement methods.

### Deblocking temperature

Deblocking temperatures were measured determined from temperature sweep measurements (oscillation experiment: temperature range: 80-230 °C; frequency: 1Hz; deformation: 10%). Thereby, the deblocking temperature was defined as the temperature at which the loss factor tanδ (in the tanδ as a function of temperature diagram) starts to decrease due to the onset / start of the curing reaction.

### Thermal stability - increase in viscosity

Thermal stability of the adhesive compositions was analyzed by determining:
1) increase in viscosity during storage at 100 °C for 16 hours
2) time to reach maximum viscosity during storage at 120 °C for 16 hours

The viscosity of the tested adhesive composition was measured at the corresponding temperature (isothermal) in an oscillation experiment (frequency: 10Hz; deformation: 10%). The viscosity values were measured in the beginning of the test and after that every 4 minutes until the end of the storage period.

### Green (peel) strength, TPO and acrylonitrile butadiene styrene (ABS)

The adhesive composition provided in a sealed tube was preheated in an oven to a temperature of 110 °C for a time period of 30 minutes. After the heating, a sample of the molten adhesive was applied on the surface of a first polymeric specimen (TPO) having dimensions of 220 mm x 50 mm x 1 mm. The adhesive was applied as a film having dimensions of 150 mm x 50 mm and a thickness of 100 µm.

The adhesive layer on the TPO specimen was then heated under an IR-field with 180 °C for 1 minutes. A second polymeric specimen (ABS) having same dimensions as the first polymeric specimen was positioned over the first polymeric specimen along the edge of the adhesive film to form a composite element and pressed with a hydraulic press for 30 seconds with a force of 0.75 kg/cm². The composite specimen was stored at standard climatic conditions (23 °C, 50 % relative humidity) for a period of 60 minutes before measuring of the green strength of the adhesive composition.

The green strength of the adhesive composition was determined as 90° peel strength of the adhesive bond. The 90° peel strengths were measured with a material testing apparatus (Zwick Z 2.5) fulfilling the requirements of the DIN 53289 standard and using a traversing speed of 10 mm/min. The mean value of the force (between 15 % and 90 % of the diagram length) was first determined and then the mean peel strength was calculated by dividing the mean peel force by the width of the composite specimen.

The green strength values for each adhesive composition presented in Table 2 have been obtained as an average of two measurements conducted with identical composite elements prepared by using the same adhesive composition.

**Table 2**

| **Composition [wt.-%]** | **Ref-1** | **Ex-1** | **Ref-2** | **Ex-2** | **Ref-3** | **Ex-3** |
|---|---|---|---|---|---|---|
| Blocked prepolymer **PU1** | 85.01 | 83.91 | 77.40 | 76.50 | - | - |
| Blocked prepolymer **PU2** | - | - | - | - | 93.51 | 92.98 |
| Compound **P1** | 14.57 | 14.38 | - | - | 6.25 | 6.22 |
| Compound **P2** | - | - | 22.30 | 22.10 | - | - |
| Thiol compound **T** | - | 1.29 | - | 1.10 | - | 0.56 |
| Metal catalyst **C** | 0.42 | 0.42 | 0.30 | 0.30 | 0.24 | 0.24 |
| **Total** | 100.00 | 100.00 | 100.00 | 100.00 | 100.00 | 100.00 |

| **Measured properties** | | | | | | |
|---|---|---|---|---|---|---|
| Deblocking temperature [°C] | 165 | 172 | 164 | 168 | 164 | 176 |
| Increase viscosity 16 h @100 °C [%] | 715 | 307 | 444 | 128 | 620 | 256 |
| Time to reach maximum viscosity 16 h @120 °C [min] | 360 | 740 | 200 | 480 | 310 | 680 |
| Green strength - Peel [N/5 cm] | 87 | 120 | 59 | 83 | 53 | 77 |
| *Failure mode in green strength | sf | sf | sf | sf | cf | sf |

| | | | | | | |
|---|---|---|---|---|---|---|
| *sf = substrate failure, cf = cohesive failure | | | | | | |

## Claims

1. A hot-melt adhesive composition comprising:
a) A blocked polyurethane prepolymer **PU,**
b) At least one isocyanate-reactive compound **P,**
c) At least one thiol compound **T,** and
d) At least one metal catalyst **C** that can catalyze reactions between isocyanate groups and isocyanate reactive groups and that can build thiol complexes,
wherein the blocked polyurethane prepolymer **PU** is a polyurethane prepolymer of the formula (I) 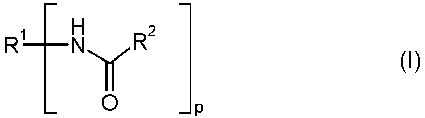
where R¹ is a p-valent radical of a linear or branched isocyanate terminated polyurethane prepolymer after the removal of the isocyanate groups;
p has a value of 2 to 8; and
R² is a blocking group which is eliminated at a temperature of at or above 100 °C, preferably at or above 130 °C.

2. The hot-melt adhesive composition according to claim 1, wherein the substituent R² is a phenol after removal of a phenolic hydrogen atom or a ε-caprolactam after removal of the nitrogen-bound hydrogen atom.

3. The hot-melt adhesive composition according to claim 2, wherein the phenol is a monophenol, preferably selected from phenol (monohydroxybenzene), cresol, 4-methoxyphenol (HQMME), resorcinol, catechol, cardanol (from cashew nutshell oil), and nonylphenol.

4. The hot-melt adhesive composition according to any one of previous claims, wherein the blocked polyurethane prepolymer **PU** is obtained from reacting a polyurethane prepolymer **PUP** having terminal isocyanate groups and at least one isocyanate reactive blocking agent **B** of formula R²H.

5. The hot-melt adhesive composition according to claim 4, wherein the polyurethane prepolymer **PUP** has an average isocyanate-functionality determined according to ISO 14896-2009 standard method A in the range of 1.2 - 3.0, preferably 1.5 - 2.5 and/or an isocyanate content determined by using the method as defined in ISO 11909:2007 standard in the range of 0.5 - 25 wt.-%, preferably 1.0 - 20 wt.-%.

6. The hot-melt adhesive composition according to claim 4 or 5, wherein the polyurethane prepolymer **PUP** is obtained from reacting at least one polyol **PO** and at least one diisocyanate **I** at a molar ratio of at least 3, preferably at least 4 and preferably subjecting the thus obtained reaction mixture to a treatment to reduce the amount of residual monomeric diisocyanates, preferably by distillation.

7. The hot-melt adhesive composition according to claim 6, wherein the at least one polyol **PO** is selected from polyester polyol, polyether polyol, polycarbonate polyol, and poly(tetramethylene ether)glycol.

8. The hot-melt adhesive composition according to claim 6 or 7, wherein the at least one diisocyanate **I** is a monomeric diisocyanate, preferably having a number average molecular weight (Mₙ) of not more than 500 g/mol, more preferably not more than 300 g/mol.

9. The hot-melt adhesive composition according to any one of claims 4-8, wherein the polyurethane prepolymer **PUP** has a content of monomeric diisocyanates of not more than 1.0 wt.-%, preferably not more than 0.5 wt.-%.

10. The hot-melt adhesive composition according to any one of previous claims,
wherein the at least one isocyanate-reactive compound **P** is selected from polyether polyols and polyether amines, preferably having a number average molecular weight (Mₙ) of 250 - 15000 g/mol, more preferably 350 - 10000 g/mol and/or having on average 2 - 6, preferably 3-6 isocyanate reactive groups per molecule.

11. The hot-melt adhesive composition according to any one of previous claims, wherein the at least one thiol compound **T** contains on average 1 - 5, preferably 2 - 4 thiol groups per molecule.

12. The hot-melt adhesive composition according to any one of previous claims, wherein the at least one thiol compound **T** is selected from ethylene glycol di(3-mercaptopropionate), ethylene glycol di(2-mercaptoacetate), trimethylolpropane tri(3-mercaptopropionate), trimethylolpropane tri(2-mercaptoacetate), pentaerythritol tetra(3-mercaptopropionate), pentaerythritol tetra(2-mercaptoacetate), dipentaerythritol hexa(3-mercaptopropionate), dipentaerythritol hexa(2-mercaptoacetate), 2,3-dimercapto-1,3,4-thiadiazole, and 3,6-dioxa-1,8-octanedithiol.

13. The hot-melt adhesive composition according to any one of previous claims, wherein the molar ratio of all thiol groups in the at least one thiol compound **T** to all metal atoms in the at least one metal catalyst **C** is from 1:1 to 20:1, preferably from 4:1 to 16:1.

14. Use of the hot-melt adhesive composition according to any one of previous claims as an assembly adhesive, laminating adhesive, or as an adhesive for the building of sandwich elements.

15. A method for adhesively bonding a first substrate to a second substrate, the method comprising the steps of:
I) Heating a hot-melt adhesive composition according to any one of claims 1-13 to provide a melted adhesive composition,
II) Applying the melted adhesive composition to a surface of the first substrate to form an adhesive film,
III) Heating the adhesive film to a reactivation temperature, and
IV) Mating the first substrate obtained from step II) or III) with a second substrate such that a surface of the second substrate is directly contacted with the adhesive film.
